# DEMANDE DE BREVET EUROPEEN

(11) **EP 2 950 249 A1**
(43) Date de publication de la demande: **02.12.2015**
(21) Numéro de dépôt: 15168258.0
(22) Date de dépôt: 19.05.2015
(51) Int. Cl.: G06Q 10/06

(54) **PROCÉDÉ D'INTERACTION D'UN GROUPE D'UTILISATEURS AVEC UN AUTOMATISME**

(30) Priorité: 27.05.2014 FR 1454775
(71) Demandeur: Orange, 75015 Paris (FR)
(72) Inventeur: Toutain, François, 22700 Louannec (FR); Le Huerou, Emmanuel, 22700 Saint Quay Perros (FR)

(57) **Abrégé**

L'invention concerne un procédé de validation d'une action déterminée par un moteur de règles d'un serveur domotique adapté pour sélectionner une action à partir d'un événement déclencheur (200) et d'une règle associée, le procédé étant tel qu'une règle est associée à une politique de validation de l'exécution de l'action et qu'il comporte, à la sélection d'une action (201), des étapes de génération (202) d'au moins une interface à partir de la politique de validation associée à la règle ; de transmission (203) de la au moins une interface de validation vers au moins un terminal associé au serveur domotique ; de réception (204) d'informations de validation de l'action en provenance du au moins un terminal ; et d'exécution (205) de l'action lorsque la règle est validée en accord avec la politique de validation.

## Description

### DOMAINE TECHNIQUE

L'invention appartient au domaine de la domotique et concerne plus particulièrement un procédé de validation d'une action déterminée par un automatisme.

### ART ANTÉRIEUR

De nos jours, les systèmes d'automatisation de l'habitat se démocratisent. Ils permettent notamment de réaliser des économies d'énergie ou d'améliorer le confort de l'habitat.

Il existe des systèmes de pilotage manuel qui associent un équipement domotique avec une interface utilisateur telle que par exemple une application sur smartphone ou une télécommande. L'application permet à l'utilisateur de piloter l'équipement, comme par exemple commander l'ouverture d'une porte de garage, des volets roulants ou encore l'allumage et extinction d'un chauffage.

D'autre systèmes permettent d'adapter l'environnement domestique à son style de vie. Par exemple, certains systèmes domotiques permettent de programmer des scénarios en fonction des habitudes des utilisateurs. Par exemple, en quittant le logement le matin, un simple clic sur un interrupteur installé dans l'entrée enclenche le scénario « départ au travail » : l'éclairage s'éteint, le garage s'ouvre, le chauffage se met en veille après quelques minutes, puis les volets et le garage se ferment après 30 minutes. Le soir, en quittant le travail, on peut actionner à distance un scénario de retour à l'aide d'un terminal connecté tel qu'un smartphone ou un ordinateur de bureau: les volets s'ouvrent et le chauffage passe en mode confort.

On voit également apparaître des approches de gestion « intelligente » d'une maison qui permettent au logement de réagir automatiquement à certains évènements. Ces systèmes très complets intègrent généralement une série de capteurs, comme par exemple des capteurs de température intérieure et extérieure, des capteurs de luminosité, de présence, de fumées, etc... Ainsi, le système domotique du logement peut automatiquement activer certains scénarios à partir d'informations contextuelles. Par exemple, lorsqu'un vent fort se lève, le système peut automatiquement relever un store sur une terrasse de façon à ce qu'il ne soit pas endommagé. De même, le système peut ouvrir ou fermer les volets en fonction de l'orientation du soleil et de la saison, de façon à optimiser la consommation d'énergie.

Toutefois, ces systèmes de gestion intelligents sont confrontés à un problème épineux de type « situation exceptionnelle ». En effet, l'intelligence procurée par les approches pratiques existantes n'est pas suffisamment évoluée, et la situation perçue par le système n'est pas suffisamment complète pour prendre en compte tous les aspects d'une situation et être certain que l'action automatique déclenchée est opportune.

Par exemple, un système capable de détecter que les membres du foyer sont sortis et que les lumières sont restées allumées peut automatiquement les éteindre. Si cependant une personne invitée se trouve dans la maison, elle ne sera pas forcément détectée et connaîtra le désagrément d'une obscurité imposée.

Il existe donc un besoin d'un système d'interaction entre les utilisateurs d'un système domotique et un automatisme pour valider des décisions prises par l'automatisme.

### RÉSUMÉ DE L'INVENTION

À cet effet, l'invention concerne un procédé de validation d'une action déterminée par un moteur de règles d'un serveur domotique adapté pour sélectionner une action à partir d'un événement déclencheur et d'une règle associée, le procédé étant tel qu'une règle est en outre associée à une politique de validation de l'exécution de l'action et qu'il comporte, à la sélection d'une action, des étapes de recherche dans une base de données d'un ensemble d'utilisateurs habilités à valider l'action ; de génération, pour chaque utilisateur de l'ensemble, d'au moins une interface personnalisée selon son habilitation à valider l'action, à partir de la politique de validation associée à la règle, et de transmission de la au moins une interface de validation vers au moins un terminal associé à l'utilisateur ; de réception d'informations de validation de l'action en provenance du au moins un terminal ; et d'exécution de l'action lorsque la règle est validée en accord avec la politique de validation.

De manière classique, lorsqu'un événement est détecté par le serveur domotique, celui-ci recherche une règle associée à cet événement. Les règles peuvent par exemple être stockées dans une base de données. À partir de la règle et de l'évènement détecté, le serveur domotique détermine une action à exécuter en réponse à l'évènement. Selon l'invention, l'exécution de l'action est conditionnée par une validation de cette action par au moins un utilisateur dont le terminal est associé au serveur domotique et selon une politique de validation. Afin que l'action puisse être validée, le serveur domotique selon l'invention génère une interface utilisateur adaptée à la politique de validation de l'action. Par exemple, le système peut générer une interface, par exemple une interface graphique ou encore une interface vocale, qui présente des informations de contexte utiles à la validation de l'action de façon à ce que les différents utilisateurs dont les terminaux sont associés au serveur domotique puissent valider ou invalider l'action avant qu'elle ne soit exécutée. Ainsi, le procédé permet à des utilisateurs disposant d'un terminal associé à un serveur domotique de valider ou invalider une action automatique.

Selon une réalisation particulière, le procédé est tel que la politique de validation est définie par au moins un ensemble d'utilisateurs habilités à valider l'action et/ou un quorum de validation.

La politique de validation associée à une règle permet de désigner un ensemble d'utilisateurs habilités à valider une action et les modalités de cette validation. Par exemple, l'ensemble des utilisateurs habilités à valider des actions relatives à un système de chauffage peut être constitué des seuls parents du foyer. Toujours par exemple, lorsqu'il s'agit de valider l'extinction de lumières restées allumées dans une habitation alors que personne n'y est présent, l'ensemble des utilisateurs habilités à valider l'action peut être constitué par tous ses habitants, parents et enfants. Ainsi, il est possible de cibler précisément les utilisateurs aptes à valider l'action.

La politique de validation peut également comporter un quorum. Ainsi, alors que certaines actions peuvent nécessiter la validation d'au moins un utilisateur parmi les utilisateurs habilités, d'autres peuvent nécessiter une unanimité.

Ainsi, un système domotique mettant en oeuvre le procédé de validation permet avantageusement de ne solliciter que les utilisateurs habilités à valider une action particulière et d'imposer le respect d'un quorum pour qu'une action donnée soit validée.

Selon un mode de réalisation particulier, le procédé est tel que la génération de l'interface est adaptée à au moins un ensemble d'utilisateurs défini par la politique de validation.

L'interface générée pour un utilisateur donné dépend de son habilitation pour valider l'action. Par exemple, lorsqu'un système détecte une hausse des températures, une interface permettant de valider l'arrêt d'un chauffage peut être générée et présentée aux adultes d'un foyer et une autre interface présentant uniquement les informations sur la situation, sans possibilité de validation, peut être générée pour être présentée aux enfants. Le procédé permet ainsi d'informer et de solliciter sélectivement les membres d'un foyer en fonction du type d'action à valider.

Selon un mode particulier de réalisation, le procédé est tel que l'étape d'exécution de l'action consiste en une annulation d'une action exécutée au préalable.

Le procédé permet ainsi une validation à postériori d'une action effectuée au préalable. Par exemple, un système domotique peut décider d'ouvrir la porte du garage en fin de journée de façon à ce qu'un membre du foyer puisse y garer une voiture en rentrant du travail. Un capteur associé à la porte du garage déclenche une règle informant les différents membres du foyer que la porte du garage est ouverte. Une interface particulière peut alors être générée à destination des membres du foyer qui disposent d'un permis de conduire de façon à permettre l'annulation de l'action d'ouverture du garage lorsque le retour à la maison est différé.

Selon un mode particulier de réalisation, le procédé est tel que l'évènement déclencheur est issu d'un capteur raccordé au serveur domotique.

Le système domotique est connecté à un ensemble de capteurs lui permettant d'évaluer des grandeurs physiques du monde réel. En inférant les informations issues de ces capteurs à partir de règles, le procédé peut avantageusement sélectionner des actions à effectuer en réponse à ces informations. Par exemple, le système domotique peut être connecté à un anémomètre apte à mesurer la vitesse du vent et ainsi prendre la décision de remonter un store extérieur lorsque la vitesse du vent dépasse une valeur prédéterminée.

L'invention concerne également un dispositif de validation d'une action déterminée par un moteur de règles d'un serveur domotique adapté pour sélectionner une action à partir d'un événement déclencheur et d'une règle associée, le dispositif étant tel qu'une règle est associée à une politique de validation de l'exécution de l'action et qu'il comporte des unités de sélection d'une action à partir d'un événement déclencheur ; de recherche dans une base de données, d'un ensemble d'utilisateurs habilités à valider l'action, de génération, pour chaque utilisateur de l'ensemble, d'au moins une interface personnalisée selon son habilitation à valider l'action, à partir de la politique de validation associée à la et de transmission de la au moins une interface de validation vers au moins un terminal associé à l'utilisateur; de réception d'informations de validation de l'action en provenance du au moins un terminal ; et d'exécution de l'action lorsque la règle est validée en accord avec la politique de validation.

L'invention concerne également un serveur comprenant au moins un dispositif de validation conforme à la description ci-dessus.

L'invention concerne aussi une passerelle domestique comprenant un serveur conforme à la description ci-dessus.

L'invention concerne également un programme d'ordinateur comportant les instructions pour l'exécution du procédé de validation tel que décrit ci-dessus, lorsque le programme est exécuté par un processeur.

Un dernier aspect de l'invention se rapporte à un support d'enregistrement lisible par un ordinateur sur lequel est enregistré un programme d'ordinateur comprenant des instructions pour l'exécution des étapes du procédé de validation.

Les dispositifs, serveurs, passerelles, programmes et supports d'enregistrement présentent des avantages analogues à ceux du procédé correspondant décrit ci-dessus.

### LISTE DES FIGURES

D'autres avantages et caractéristiques de l'invention apparaîtront plus clairement à la lecture de la description suivante d'un mode de réalisation particulier, donné à titre de simple exemple illustratif et non limitatif, et des dessins annexés, parmi lesquels :
- La figure 1 illustre de façon simplifiée un système domotique d'une habitation adapté pour la mise en oeuvre du procédé de validation d'une action selon une réalisation particulière de l'invention,
- La figure 2 illustre les étapes du procédé de validation selon un mode particulier de réalisation de l'invention, et
- La figure 3 illustre l'architecture d'un dispositif mettant en oeuvre le procédé de validation selon un mode particulier de réalisation de l'invention.

### DESCRIPTION DÉTAILLÉE D'UN MODE PARTICULIER DE RÉALISATION

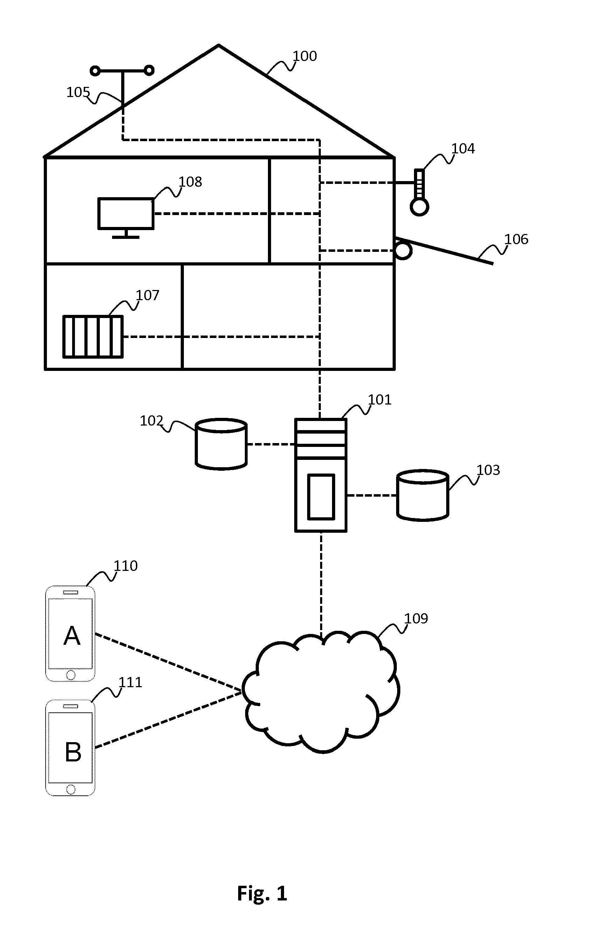

La figure 1 illustre une habitation 100 équipée d'un serveur domotique 101 adapté pour mettre en oeuvre le procédé de validation d'une action selon l'invention.

Le serveur domotique est raccordé à des capteurs, comme par exemple un anémomètre 105 apte à mesurer la vitesse du vent et un thermomètre 104 pour mesurer la température extérieure. Ces capteurs sont cités à titre d'exemples illustratifs et il est entendu que d'autres types de capteurs peuvent être utilisés, comme par exemple des détecteurs d'ouverture de portes ou fenêtres, des détecteurs de fumées, de lumière ou de présence. L'installation peut également comporter des capteurs adaptés pour déterminer qu'un dispositif comme un téléviseur, une console de jeux ou un équipement électroménager est sous tension.

Le serveur domotique est également raccordé à des actionneurs adaptés pour effectuer des actions. Ces actionneurs peuvent être par exemple des relais ou des moteurs adaptés par exemple pour activer ou désactiver le système de chauffage 107, l'ordinateur 108 ou encore ouvrir ou fermer le store extérieur 106.

À titre d'exemple, le raccordement des capteurs et des actionneurs peut se faire par l'intermédiaire de liaisons sans fil de type Bluetooth ou WIFI ou bien en utilisant des technologies filaires de type Ethernet ou courant porteur.

Ainsi, le serveur domotique 101 peut, de manière classique, répondre à des stimulations extérieures en agissant sur des actionneurs selon des règles de gestion. Par exemple, le serveur domotique peut rentrer le store 106 lorsque la vitesse du vent détectée par l'anémomètre 105 dépasse une certaine valeur de façon à ce qu'il ne soit pas endommagé, stopper le chauffage 107 lorsque la température extérieure mesurée par le thermomètre 104 dépasse une valeur prédéterminée ou encore mettre hors tension l'ordinateur 108 lorsqu'aucune présence n'est détecté dans l'habitation.

L'installation comprend également une première base de données 103 dans laquelle sont stockées les règles de gestion permettant au serveur d'effectuer des actions en réponse aux stimulations extérieures détectées par les différents capteurs. Ces règles contiennent en particulier un ou plusieurs évènements déclencheurs, au moins une condition de déclenchement, une politique de validation et au moins une action à réaliser lorsque les conditions sont réunies et que l'exécution est validée en accord avec la politique de validation. Toutes ces règles, conditions et politiques de validation ont été définies au préalable et enregistrées dans le système domotique, par exemple lors d'une phase de configuration du système. Les évènements déclencheurs sont des informations contextuelles obtenues à partir de capteurs, comme par exemple l'anémomètre 105 ou le thermomètre 104. Les informations contextuelles peuvent également être obtenues à partir d'un calendrier, d'une horloge, d'un équipement électroménager, de l'ordinateur 108 ou de n'importe quelle autre source apte à fournir une information de contexte. Les conditions permettent au serveur domotique de déterminer si la situation nécessite l'exécution d'une action particulière. Par exemple, le serveur peut comparer la vitesse du vent mesurée par l'anémomètre 105 avec une valeur prédéterminée pour décider ou non de la fermeture du store 106. La politique de validation défini l'autonomie du serveur domotique quant à l'exécution d'une action en réponse à une situation donnée. L'information de politique de validation comporte un ensemble d'utilisateurs qui devront donner leur accord ou être informés avant l'exécution de l'action. Ces utilisateurs peuvent être référencés dans la base de données 102 par exemple. À titre d'exemple, lorsque les conditions sont réunies pour que le serveur domotique stoppe le système de chauffage 107, la politique de validation peut nécessiter que les adultes du foyer donnent leur accord avant que l'action soit effectivement réalisée. Selon un mode de réalisation particulier, si la politique de validation est absente ou qu'elle ne désigne aucune personne habilitée à valider l'action, le serveur peut automatiquement exécuter l'action. Selon un autre mode de réalisation particulier, si la politique de validation est absente ou qu'elle ne désigne aucune personne habilitée à valider l'action, le serveur peut utiliser une politique de validation par défaut désignant la totalité des utilisateurs référencés et nécessitant par exemple qu'au moins un de ces utilisateurs valide l'action. Selon une réalisation particulière, la politique de validation peut également indiquer les modalités de validation, par exemple en comprenant un quorum. Ainsi, certaines actions peuvent nécessiter d'être validées par un nombre minimum de personnes afin d'être exécutées. Par exemple, l'arrêt du système de chauffage 107 peut nécessiter qu'au moins un adulte valide l'action. Toujours par exemple, une politique de validation peut requérir une unanimité des utilisateurs indiqués dans la politique de validation avant de stopper l'ordinateur 108. Enfin, une règle comprend une ou plusieurs actions à effectuer lorsque les conditions sont réunies et que la décision est validée selon la politique de validation. L'action peut consister à activer des équipements physiques raccordés au serveur, comme par exemple ouvrir le store 106, piloter un éclairage, ou un appareil électroménager ou encore ouvrir une porte de garage. L'action peut également être de nature numérique et peut consister par exemple à ajouter un rendez-vous dans un agenda, envoyer un courriel, télécharger un contenu numérique à partir d'un serveur ou encore passer une commande chez un fournisseur. L'action peut également être constituée de plusieurs sous-actions permettant de mettre en oeuvre un scénario, comme par exemple ouvrir la porte du garage, allumer le système de chauffage et ouvrir les volets en fin de journée afin d'accueillir les membres du foyer au retour de leur journée de travail.

Une seconde base de données 102 contient des renseignements concernant les différentes personnes composant le foyer. Par exemple, pour une personne donnée, la base de données contient les équipements dont ils sont responsables, un identifiant du terminal de communication utilisé ou encore les horaires habituels de sortie et de retour. D'autres caractéristiques des utilisateurs peuvent être consignées dans cette base de données en fonction des besoins de l'installation.

L'installation domotique représentée sur la figure 1 comprend également deux terminaux 110 et 111 raccordés au serveur domotique 101 par l'intermédiaire d'un réseau 109, par exemple un réseau

Internet. Ces terminaux sont adaptés pour afficher une interface de validation générée par le serveur de domotique 101.

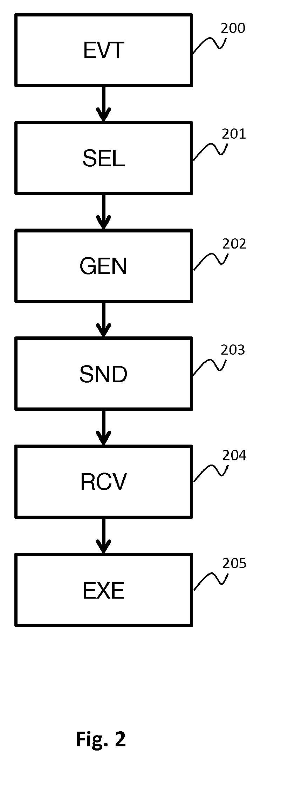

La figure 2 illustre les principales étapes du procédé de validation selon un mode particulier de réalisation. Lors d'une première étape 200, le serveur domotique obtient un événement à partir d'une source de contexte. Par exemple, le serveur domotique obtient une mesure de la température extérieure au logement par l'intermédiaire d'un capteur de température comme le thermomètre 104 de la figure 1. L'évènement peut également être obtenu à partir d'un équipement électroménager ou d'une source de donnée numérique comme un agenda en ligne ou une horloge par exemple. Il peut aussi s'agir d'un événement de communication, comme par exemple la réception d'un appel téléphonique ou d'un courriel.

Lors de l'étape 201, le serveur domotique recherche une règle associée à l'évènement, par exemple en consultant la base de donnée 103. L'évènement peut être constitué par une combinaison de données issues de différentes sources de contexte. Lorsque le serveur domotique identifie une règle correspondant à l'évènement et que les conditions indiquées dans la règle sont réunies, il peut identifier une action à exécuter en réponse à cet événement et une politique visant à valider l'exécution de cette action. Par exemple, suite à l'obtention d'une information issue de l'anémomètre 105, le système peut identifier plusieurs règles en rapport avec cet événement, comme par exemple une règle consistant à fermer le store lorsque la vitesse du vent dépasse un certain seuil et une règle consistant à ouvrir le store lorsque la vitesse du vent est inférieure à un seuil. Le serveur peut alors évaluer les conditions associées à ces règles pour déterminer celles qui sont applicables à la situation. Ces conditions peuvent faire référence par exemple à des mesures de différents capteurs, à une date indiquée par une horloge, ou à tout autre information de contexte. Lorsque la ou les règles applicables sont identifiées, le système sélectionne une ou plusieurs actions à réaliser.

Lors de l'étape 202 le serveur domotique consulte une politique de validation associée à la règle ou à l'exécution de l'action. Le serveur doit alors soumettre l'exécution de l'action à au moins un utilisateur désigné par la politique de validation et obtenir un accord selon une modalité de validation prédéterminée avant d'exécuter l'action.

Pour cela, le serveur génère au moins une interface à partir de la politique de validation associée à la règle. Dans un mode de réalisation particulier, l'interface de validation est adaptée aux différents utilisateurs désignés par la politique de validation. Il peut s'agir par exemple d'une interface graphique sous forme de document HTML (Hypertext Markup Language) comportant un message de rappel de la situation qui nécessite une action et les contrôles nécessaires à la validation de la règle. L'interface peut comporter d'autres informations utiles à la compréhension de la situation, comme par exemple un plan de l'habitation explicitant la localisation d'un événement déclencheur, une photo issue d'une caméra de surveillance ou encore un flux vidéo illustrant la situation. L'interface générée pour la validation d'une action particulière peut être différente d'un utilisateur à l'autre, en fonction de critères renseignés par exemple dans la base de données 102. Ces critères peuvent comprendre par exemple l'âge de l'utilisateur, sa situation dans la famille (parent, enfant), les équipements qui lui sont rattachés. Selon un mode de réalisation particulier, l'interface générée peut être uniquement informative pour certains utilisateurs et solliciter une validation pour d'autres utilisateurs. Selon une réalisation particulière de l'invention, l'interface peut refléter certaines modalités de validation. Par exemple, un système domotique peut solliciter les utilisateurs afin que chacun d'eux votent pour un film à télécharger en prévision d'une soirée cinéma familiale, et proposer dans ce cas une interface de sélection à choix multiple.

Lorsque les interfaces de validation sont générées en accord avec la politique de validation, le serveur domotique transmet ces interfaces vers les terminaux des utilisateurs lors d'une étape 203. Pour cela, le serveur identifie les terminaux associés aux utilisateurs concernés, en utilisant par exemple les informations de la base de données 102, puis transmet les données de l'interface par l'intermédiaire du réseau 109. Selon un mode de réalisation particulier, le serveur domotique génère une notification à destination de ces terminaux dans le but d'attirer l'attention des utilisateurs sur le fait qu'une validation est attendue de leur part. Cette notification peut être par exemple un message de type SMS (Short Message Service) ou encore une notification de type « push » adaptée au terminal destinataire. Lors de la consultation de la notification, le terminal peut alors télécharger l'interface de validation et la présenter à l'utilisateur.

À l'étape 204, le serveur domotique reçoit les réponses des utilisateurs sollicités. Lorsque les réponses sont en accord avec les modalités de validation, par exemple lorsque le quorum est atteint, l'action associée est exécutée par le serveur domotique lors de l'étape 205.

Selon une réalisation particulière de l'invention, les interfaces générées sont dynamiques. Elles peuvent par exemple être synchronisées entre elles et refléter les réponses apportées par les différents utilisateurs en affichant par exemple un compteur permettant aux utilisateurs de savoir lorsque le quorum est atteint. Selon un mode de réalisation particulier, l'interface cesse d'être présentée dans certaines conditions. Par exemple, l'interface peut cesser d'être présentée lorsque le quorum de validation est atteint, lorsque l'action a été directement déclenchée par un utilisateur (par exemple, si la validation concerne la fermeture automatique d'une porte de garage et qu'une personne sur place ferme manuellement cette porte, l'interface de validation peut cesser d'être présentée), ou bien encore lorsque les conditions de déclenchement de la règle ne sont plus présentes (par exemple, si la validation concerne la fermeture d'un store à cause d'un vent fort, l'interface peut cesser d'être présentée lorsque la vitesse du vent diminue).

Selon un mode de réalisation particulier, les utilisateurs disposent d'une fenêtre temporelle pendant laquelle il est possible de valider une action. À l'expiration de cette fenêtre temporelle, l'action peut être par exemple automatiquement exécutée ou automatiquement annulée.

Selon une réalisation particulière, les réponses données par les utilisateurs et/ou les interfaces présentées sont mémorisées de façon à pouvoir être consultées ultérieurement.

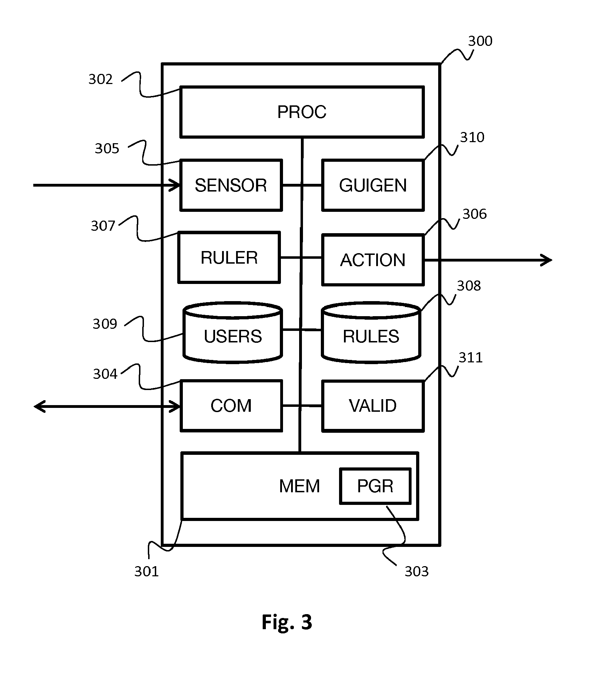

La figure 3 illustre l'architecture d'un dispositif 300 adapté pour mettre en oeuvre l'invention selon un mode particulier de réalisation.

Le dispositif comprend un espace de stockage 301, par exemple une mémoire MEM, une unité de traitement 302 équipée par exemple d'un processeur PROC. L'unité de traitement peut être pilotée par un programme 303, par exemple un programme d'ordinateur PGR, mettant en oeuvre le procédé de validation tel que décrit dans l'invention en référence à la figure 2, et notamment les étapes de génération d'au moins une interface à partir de la politique de validation associée à la règle ; de transmission de la au moins une interface de validation vers au moins un terminal associé au serveur domotique; de réception d'informations de validation de l'action en provenance du au moins un terminal ; et d'exécution de l'action lorsque la règle est validée en accord avec la politique de validation.

À l'initialisation, les instructions du programme d'ordinateur 303 sont par exemple chargées dans une mémoire RAM (Random Access Memory en anglais) avant d'être exécutées par le processeur de l'unité de traitement 302. Le processeur de l'unité de traitement 302 met en oeuvre les étapes du procédé de validation selon les instructions du programme d'ordinateur 303.

Pour cela, le dispositif comprend, outre la mémoire 301, un module de communication 304 (COM) permettant au dispositif de se connecter à un réseau de communication et d'échanger des données avec d'autres dispositifs par l'intermédiaire de ce réseau de télécommunications, et par exemple de transmettre des interfaces de validation vers des terminaux et de recevoir les réponses des terminaux correspondant. Ce module de communication peut par exemple être une interface réseau de type WIFI ou Ethernet. Le dispositif comprend également un module de raccordement 304 (SENSOR) à des capteurs et un module de raccordement 306 (ACTION) à des actionneurs. Ces modules de raccordement peuvent être par exemple des interfaces réseau, Bluetooth, courant porteur ou encore par exemple un fil pilote et servent notamment à recevoir des informations en provenance des capteurs et à piloter des actionneurs pour réaliser les actions lorsqu'elles ont été validées en accord avec la politique de validation. Le dispositif comprend également un module d'interprétation de règles (307). Ce module sert notamment à rechercher les règles associées à des évènements obtenus par l'intermédiaire du module de raccordement des capteurs (305) dans une base de données de règles (308) du dispositif, à vérifier si les conditions de déclenchement d'une action sont remplies, et à sélectionner une action à effectuer. Le dispositif comporte en outre un module de génération (310) d'au moins une interface à partir d'une politique de validation associée à une règle et une base de données d'utilisateurs (309) servant notamment à consigner des caractéristiques d'utilisateurs associés du dispositif. Enfin, le dispositif comporte un module de validation (311) servant à analyser les réponses des utilisateurs aux demandes de validation transmises afin de déterminer si une action peut être exécutée.

Selon un mode de réalisation particulier, le dispositif peut être intégré dans un serveur domotique, une passerelle domestique, un ordinateur personnel, ou encore n'importe quel autre équipement connecté à un réseau de communication et apte à piloter des actionneurs et à recevoir des informations en provenance de capteurs.

## Revendications

1. Procédé de validation d'une action déterminée suite à l'exécution d'une règle par un serveur domotique, adapté pour sélectionner une action à partir d'un événement déclencheur et d'une règle associée, **caractérisé en ce qu'**une règle est associée en outre à une politique de validation de l'exécution de l'action, la politique de validation étant définie par un ensemble d'utilisateurs habilités à valider l'action et à un quorum de validation, et **en ce que** le procédé comporte, à la sélection d'une action (201), les étapes suivantes:
- Recherche dans une base de données, d'un ensemble d'utilisateurs habilités à valider l'action,
- Pour chaque utilisateur de l'ensemble, génération (202) d'au moins une interface personnalisée selon son habilitation à valider l'action, à partir de la politique de validation associée à la règle, et transmission (203) de la au moins une interface de validation vers au moins un terminal associé à l'utilisateur,
- réception (204) d'informations de validation de l'action en provenance du au moins un terminal, et
- exécution (205) de l'action lorsque la règle est validée en accord avec la politique de validation.

2. Procédé selon la revendication 1 **caractérisé en ce que** la génération de l'interface est adaptée à l'ensemble d'utilisateurs défini par la politique de validation.

3. Procédé selon l'une des revendications précédentes **caractérisé en ce que** l'étape d'exécution de l'action consiste en une annulation d'une action exécutée au préalable.

4. Procédé selon l'une des revendications précédentes **caractérisé en ce que** l'évènement déclencheur est issu d'un capteur raccordé au serveur domotique.

5. Procédé de confirmation, sur un terminal, de l'exécution d'une action déterminée suite à l'exécution d'une règle par un serveur domotique, une règle étant associée à une politique de validation de l'exécution de l'action, la politique de validation étant définie par un ensemble d'utilisateurs habilités à valider l'action et à un quorum de validation, le procédé étant **caractérisé en ce que** le terminal est associé au serveur domotique et qu'une habilitation est associée à l'utilisateur du terminal, et **en ce que** le procédé comporte les étapes suivantes:
- réception d'une interface de validation générée à partir de la politique de validation selon l'habilitation de l'utilisateur du terminal,
- Détection d'une action de validation sur l'interface reçue, et
- Transmission d'une information de validation vers le serveur domotique.

6. Dispositif de validation d'une action déterminée suite à l'exécution d'une règle par un serveur domotique adapté pour sélectionner une action à partir d'un événement déclencheur et d'une règle associée, **caractérisé en ce qu'**une règle est associée à une politique de validation de l'exécution de l'action, la politique de validation étant définie par un ensemble d'utilisateurs habilités à valider l'action et à un quorum de validation, et **en ce que** le dispositif comporte des unités de:
- sélection (307) d'une action à partir d'un événement déclencheur,
- recherche dans une base de données, d'un ensemble d'utilisateurs habilités à valider l'action,
- génération (310), pour chaque utilisateur de l'ensemble, d'au moins une interface personnalisée selon son habilitation à valider l'action, à partir de la politique de validation associée à la et de transmission (304) de la au moins une interface de validation vers au moins un terminal associé à l'utilisateur,
- réception (304) d'informations de validation de l'action en provenance du au moins un terminal, et
- exécution (311) de l'action lorsque la règle est validée en accord avec la politique de validation.

7. Serveur comprenant un dispositif de validation d'une action selon la revendication 5.

8. Passerelle domestique comprenant un serveur selon la revendication 6.

9. Programme d'ordinateur comportant les instructions pour l'exécution du procédé de validation selon l'une quelconque des revendications 1 à 4, lorsque le programme est exécuté par un processeur.

10. Support d'enregistrement lisible par un ordinateur sur lequel est enregistré un programme d'ordinateur comprenant des instructions pour l'exécution des étapes du procédé de validation selon l'une des revendications 1 à 4.
